# EUROPEAN PATENT SPECIFICATION

(11) **EP 2 038 388 B1**
(45) Date of publication and mention of the grant of the patent: **16.09.2015**
(21) Application number: 07763817.9
(22) Date of filing: 27.06.2007
(51) Int. Cl.: C11B 1/10, A23D 9/00, A23J 1/14

(54) **PROCESS FOR AQUEOUS OIL EXTRACTION FROM OILSEED STARTING MATERIAL**
VERFAHREN ZUR WÄSSRIGEN ÖLEXTRAKTION AUS ÖLSAMEN-AUSGANGSMATERIAL
PROCÉDÉ D'EXTRACTION AQUEUSE D'HUILE À PARTIR DE GRAINES OLÉAGINEUSES COMME MATIÈRES DE DÉPART

(30) Priority: 27.06.2006 CA 2551070
(43) Date of publication of application: 25.03.2009
(73) Proprietor: Bunge Global Innovation, LLC., White Plains NY 10606 (US)
(72) Inventor: MAENZ, David, D., Saskatoon, Saskatchewan S7N 1J8 (CA)
(74) Representative: Bezzubova, Olga
(86) International application number: PCT/CA2007/001147
(87) International publication number: WO 2008/000077

(56) References cited:
- EP-B1- 0 805 630
- WO-A1-2008/108880
- US-A- 4 075 361
- US-A- 4 530 788
- US-A- 5 936 069
- CATER C M ET AL: "Aqueous extraction - an alternative oilseed milling process." JOURNAL OF THE AMERICAN OIL CHEMISTS' SOCIETY, vol. 51, no. 4, April 1974 (1974-04), pages 137-141, XP002590773 DOI: 10.1007/BF02639723
- Khee Choon Rhee: "Silmutaneous recovery of protein and oil from raw peanuts in an aqueous system"[Online] 1972, XP002590774 Journal of food science Retrieved from the Internet: URL:http://www3.interscience.wiley.com/cgi -bin/fulltext/119682285/PDFSTART> [retrieved on 2010-07-05]
- RosenthalA.: "Aqueous and enzymatic processes for edible oil extraction"[Online] 1996, XP002590775 Enzyme and Microbial Technology Retrieved from the Internet: URL:http://www.sciencedirect.com/science?_ ob=MImg&_imagekey=B6TG1-3VV616Y-D-1&_cdi=5 241&_user=987766&_pii=S014102299680004F&_o rig=search&_coverDate=11%2F01%2F1996&_sk=9 99809993&view=c&wchp=dGLzVtb-zSkzS&md5=293 affe1edff0e6eb584116265ac9da4&ie=/sdarticl e.pdf> [retrieved on 2010-07-05]
- Shao Bing Zhang: "Optimization of the aqueous enzymatic extraction of rapeseed oil and protein hydrolysates."[Online] vol. 84, 6 December 2006 (2006-12-06), pages 97-105, XP002590776 DOI: 10.1007/s11746-006-1004-6 J Amer oil Chem Soc Retrieved from the Internet: URL:http://www.springerlink.com/content/47 34317460533251/fulltext.pdf> [retrieved on 2010-07-05]

## Description

### BACKGROUND OF THE INVENTION

This invention generally relates to the use of water and pH adjustment for the extraction of oil from oilseeds starting material, without the use of organic solvents.

Current commercial processes for the recovery of oil from oilseeds are based on expellers for mechanical removal of oil, organic solvent for extraction of oil, or a combination of expeller plus organic solvent based processes. The use of organic solvents results in >96% recovery of whole seed oil. However organic solvent use in a process involves human safety issues and environmental risks. These factors along with the additional infrastructure and control systems required to manage organic solvent use have led oilseed processors, along with government and environmental groups to consider alternative schemes which do not require organic solvents.

Non-organic solvent expeller-based systems currently do not achieve comparable levels of oil recovery and therefore are economically disadvantaged relative to organic solvent based systems. Using canola or rapeseed as the oilseed starting material, typically, an expeller-based process will generate a cake with a residual oil content of 8-12% of dry matter. Assuming typical starting oil content of the whole seed as 44% of dry matter, the net result is an efficiency of oil recovery of 83-89% of whole seed oil.

Aqueous oil extraction from oilseed material has potential as a non-organic solvent based process for removal of oil from an oilseed starting material. However, aqueous processes must provide improved oil recovery relative to non-aqueous non-organic solvent expeller-based processes if these processes are to have a practical application and considered as viable alternatives to the use of organic solvents.

A non-solvent aqueous oil extraction process applied to rapeseed has been disclosed (Aqueous Enzymatic Extraction of Oil from Rapeseeds, Denmark 1991-1994, Manufacture of Food Products and Beverages #14, Olsen) wherein, whole seed is dry milled, cooked, slurried in water, wet milled, and the slurry is treated with a cocktail of fiber degrading enzymes. The enzyme treatment is reported to disrupt oil-enclosing cellular structures such that free oil is released into the liquid phase. The oil is then recovered using disk-stacked centrifugation for oil-water separation. The oil recovery reported is comparable to that obtained with conventional non-solvent expeller based processes and does not approach the efficiencies obtained with solvent based processes. Furthermore, Olsen does not teach expelling prior to non-solvent aqueous oil recovery and does not teach alkaline pH modification of the aqueous slurry to improve oil release from compounds and insoluble structures in the slurry.

A non-organic solvent enzyme-based aqueous process for recovery of oil from rapeseed has been reported (Zhang et al., J. Am. Oil Chem. Soc., 84:97-105, 2007) wherein whole rapeseed is dry dehulled, slurried in water, wet milled, treated with fiber degrading enzymes at pH 5, alkaline extracted, treated with an alkaline protease at pH 9 and the slurry is separated into a free oil, emulsion, aqueous phase and precipitant. Zhang et. al. does not teach expelling of the whole seed prior to application of water and the process is not straightforward, requiring multiple incubation steps, and the use of a cocktail of fiber degrading enzymes and protein degrading enzymes, which can be cost prohibitive on a commercial scale.

A process for non-organic solvent aqueous oil recovery from whole rapeseed has been described (Embong and Jelen, J. Inst. Can. Sci. Technol. Aliment., 10:239-243, 1977) wherein whole rapeseed is ground, slurried and boiled with water and the pH is adjusted to 7.3. The slurry is then wet milled, pH adjusted to 6.6, agitated, and separated by centrifugation into a solids, liquid and emulsion phase. The emulsion is then de-emulsified and the oil was recovered. Embong and Jelen do not teach expelling prior to aqueous oil recovery and they do not teach pH modification of the slurry to a pH of > 8 to achieve optimal oil release from compounds and the insoluble structures in the slurry.

Ruecker et al. (US patent 6,750,048) teaches an organic solvent-less process for extracting lipids from microorganisms. The process involves lysing and then washing the cells with an aqueous washing solution to produce a non-emulsified lipid. However, Ruecker et al does not teach an organic solvent-less process for the extraction of oil from oilseeds.

While Dunford and King (US patent 6,677,469) teach an organic solvent-less process of supercritical fluid extraction applied to triglyceride containing material, the process uses carbon dioxide under extreme pressure as typical of supercritical fluid extraction. Dunford and King do not teach aqueous extraction and recovery of oil from oil-bearing starting materials.

Rohr, et al. (US patent 6,344,573) teaches a non-organic solvent based process for the extraction of lipid soluble vitamins and hormones from residues and by-products of animal and vegetable products. The process involves saponification of the saponifiable components of the starting material with high concentration of base, reacting the soaps with metal and then drying and separating the mixture into saponifiable and unsaponifiable components. However, Rohr et al. do not teach pressing an oilseed bearing material followed by addition of water and pH modification to release free oil into the liquid phase of the slurry.

EP0805630 teaches a process for producing a product containing flax proteins and flax mucilage, in which process linseeds are cold and/or hot a process and, if desired, further extracted with a suitable solvent for separating the linseed oil.

Accordingly, there is a need for a simple and inexpensive process for extracting oil from an oilseed starting material with a non organic solvent, which will lead to enhanced oil yields and is comparable to the efficiencies obtained with solvent based processes.

### SUMMARY OF THE INVENTION

The present invention is directed to a method of recovering, isolating or obtaining oil from oilseed starting materials without the use of organic solvents. The process of the present invention includes the steps of expelling of an oilseed starting material, creating an aqueous slurry with the expelled solid material, pH dependent generation of free oil in the slurry, and separating and recovering the free oil from the slurry.

In accordance with one aspect of the present invention, there is provided a process for the aqueous extraction of oil from an oilseed starting material comprising the following steps:
(a) expelling an oilseed starting material to produce an oil and a solid material that contains residual oil;
(b) slurrying the solid material with water to create a slurry;
(c) adding sufficient alkaline compound to the slurry to increase the pH of the slurry to a pH of 8 or higher;
(d) separating out the slurry into an insoluble protein enriched fraction and an oil-in-water liquid phase; and
(e) separating out the oil from the oil-in-water liquid phase.

In accordance with an aspect of the present invention described herein, the process includes the additional steps of:
(f) precipitating soluble protein from the slurry in step (c);
(g) separating out said precipitated protein from the slurry with said insoluble protein enriched fraction, in step (d).

In accordance with another aspect of the present invention there is provided a process for the aqueous extraction of oil from an oilseed starting material comprising the following steps:
(a) expelling an oilseed starting material to produce an oil and a solid material that contains residual oil;
(b) slurrying the solid material with water to create a slurry;
(c) removing fibrous solids from said slurry in step (b) to generate a fibrous fraction and a protein plus oil-in-water liquid phase;
(d) adding sufficient alkaline compound to the protein plus oil-in-water liquid phase in step (c) to increase the pH to a pH of 8 or higher;
(e) separating the slurry from step (d) into an insoluble protein enriched fraction and an oil-in-water liquid phase; and
(f) separating out the oil from the oil-in-water liquid phase in step (e).

In accordance with another aspect of the invention described herein, the process defined above includes the additional steps of:
(g) precipitating soluble protein from the slurry in step (d);
(h) separating out said precipitated soluble protein with said insoluble protein enriched fraction, in step (e).

### BRIEF DESCRIPTION OF THE DRAWINGS

FIG. 1 is a flow chart of the process for aqueous oil extraction from oilseed starting material according to one embodiment of the present invention.
FIG. 2 is a flow chart of the process for aqueous oil extraction starting material according to a second embodiment of the present invention showing an optional protein precipitation step.
FIG. 3 is a flow chart of the process for aqueous oil extraction starting material according to a third embodiment of the present invention incorporating a fibrous fraction removal step
FIG. 4 is a flow chart of the process for aqueous oil extraction starting material according to a fourth embodiment showing an optional protein precipitation step incorporated in the process shown in FIG. 3.

### DETAILED DESCRIPTION OF THE PRESENT INVENTION

Starting materials for use in the present invention include any oilseed or oilseed starting materials from oilseed crops such as soybeans, *Brassica sp.* including but not limited to canola and rapeseed, sunflower seeds, cottonseeds, sesame or safflower. Oilseeds typically contain from about 20 percent oil to about 40 percent oil (by weight), with the percentage varying with the type of oilseed. Some oilseeds also contain high levels of fiber which is not desirable and the ease of removal can vary with the type of oilseed. High levels of fiber or their degradation products in the extracted oil can affect its quality.

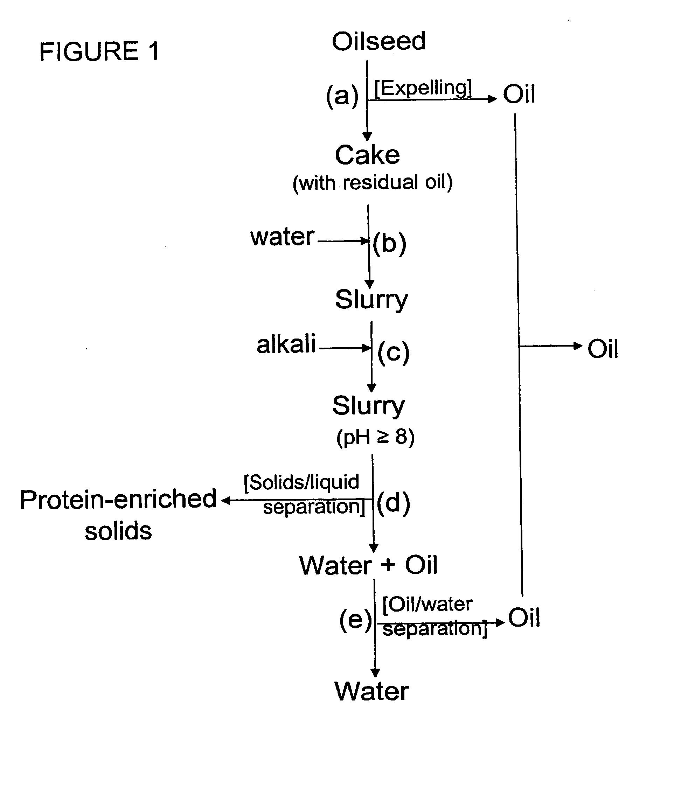

According to the present invention, the oilseed is subjected to a series of sequential treatments in order to extract oil without the use of organic solvents as will be seen from the flow charts shown in FIGS. 1-4. As discussed below and seen in the Figures, some treatments steps are optional.

The whole seeds of the oilseed starting material are typically cleaned, dehulled and conditioned as is typical for commercial practices to improve the efficiency of oil recovery. In some cases however, the whole seeds are too small to be effectively dehulled.

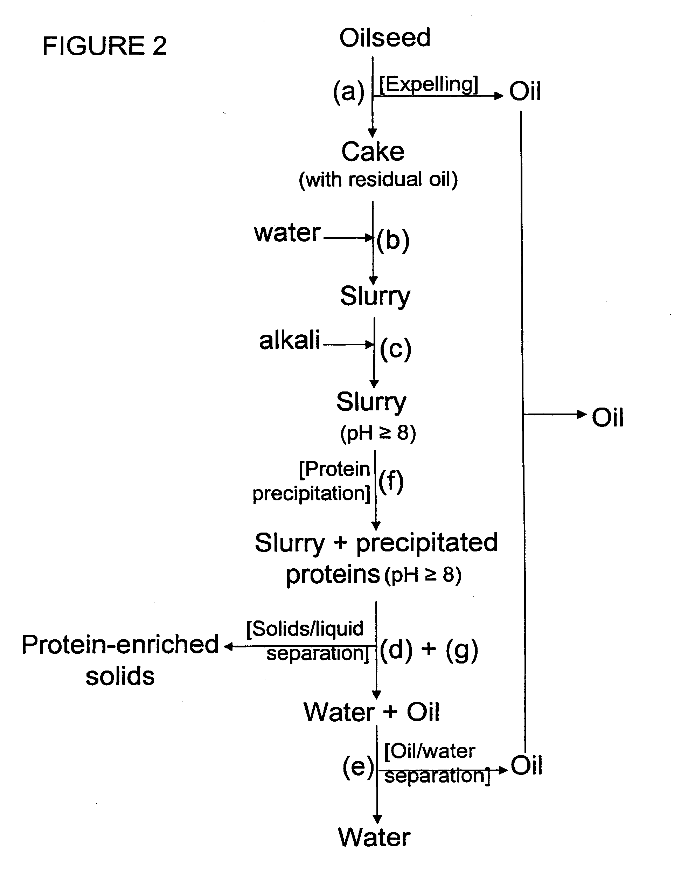

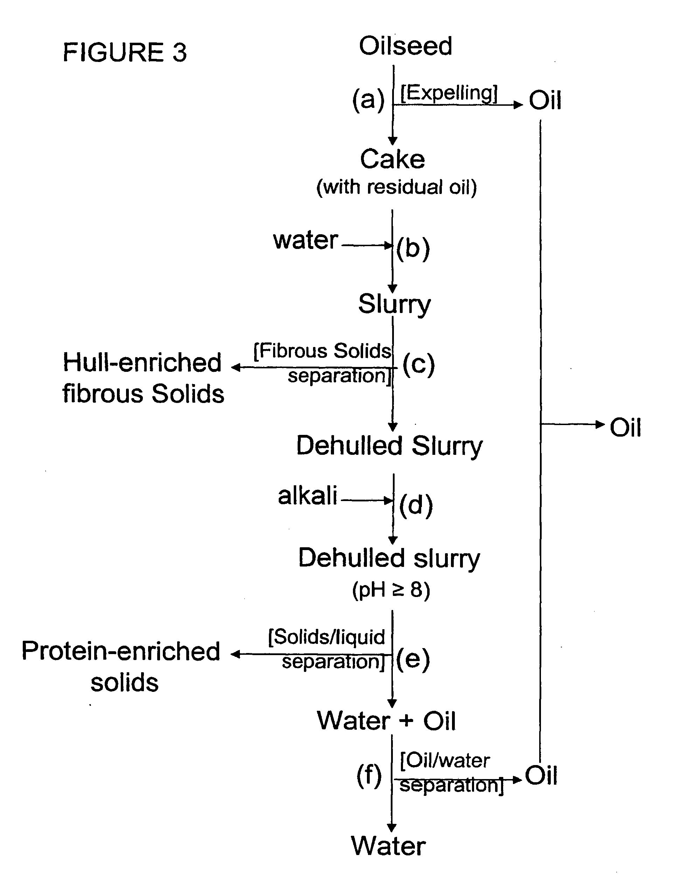

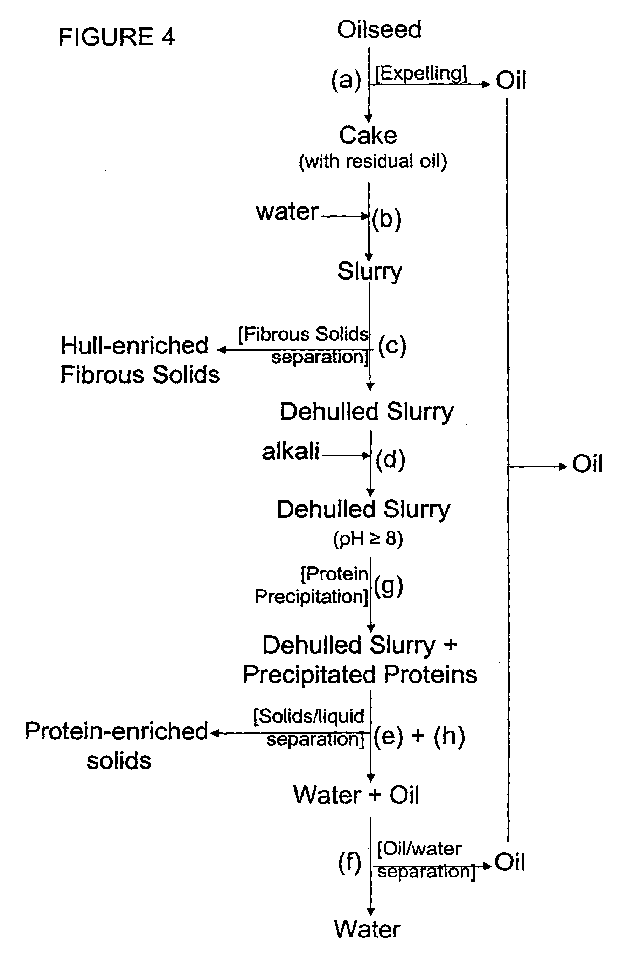

FIG 1 is a flow chart of the process according to the present invention. FIG 2 is a flow chart of the present invention incorporating an optional protein precipitation step. FIG 3. is a flow chart of another embodiment of the present invention incorporating an aqueous dehulling step. FIG 4. is a flow chart of the process disclosed in FIG 3 incorporating an optional protein precipitation step.

As seen in FIGS. 1-4, in a first step of the present invention, illustrated as step (a), the whole seeds are expelled. Typically, the conditioned seed is expelled by methods known in the art, in a low pressure pre-press, in order to generate an oil phase and a solid material expelled cake, which is often referred to as a pre-press cake. Typically, about 50% of the total seed oil is removed and recovered during this initial expelling process, with the expelled cake still containing a portion of residual oil. The expelled cake can be optionally processed through a high pressure oilseed full press to generate additional oil and a "double press cake". Typically, a total of 85% of the seed oil is recovered by the combination of pre-press plus full pressing of the seed. Similar oil recoveries can be obtained by direct full pressing of the seed, however, processing rates through the full press are considerably lower and thus for larger plants an additional number of low capacity expensive full presses are needed. As such, larger plants typically use the double press procedure for oil seed expelling. This initial expelling of the oilseed provides an oil recovery comparable to that obtained with optimized non-solvent based processes that apply water directly to the whole seed.

The oilseed cake contains non-oil portions of the whole seed plus residual oil. The residual oil recovered from pre-press cake or double press cake (hereinafter generically referred to as the "oilseed cake") according to the present invention can later be combined with the oil from the initial expelling process to provide an overall high efficiency of oil recovery without the use of solvents.

In a second step of the present invention, water is then added to the oilseed cake to form an aqueous slurry, as shown in step (b) in each of FIGS. 1-4. The mixture is then agitated to ensure that the mixing is thorough. The temperature of the mixing is not critical, but is preferred to be ambient temperature or above. It is particularly preferred to heat the mixture slightly to a temperature of 50 degrees C to 70 degrees C as this can have the effect of increasing solubility of some components. Water can also be preheated and then added to the oilseed cake. The period of mixing is not critical and periods of for example, 10 to 60 minutes are suitable. Water is added to the oilseed cake in a quantity sufficient to create a slurry, as known to one skilled in the art. Favourable results have occurred when slurrying canola seed with a ratio of 5 parts of water to 1 part oilseed cake. However, positive results were also obtained when slurrying canola seed with between about 3.5 to 7 parts water to 1 part oilseed cake.

As mentioned above, FIGS. 3 and 4 show an embodiment of the present invention incorporating an aqueous dehulling step. Aqueous dehulling is an optional step used when non-dehulled oilseed starting material is used (as in the case with canola seed) and fibrous solids are present in the slurry. In this optional step, fibrous solids are removed from the slurry. The slurry can be filtered in order to remove the hull-laden fibrous fraction. This can be achieved via any suitable method known in the art, including passing slurry through a screen. Screens with openings of 25 microns are the smallest preferably used and screens having openings of 500 microns are the largest preferably used. Particularly preferred screens are screens having 75 micron openings to screens having 250 microns openings. Small non-fibrous fragments of insoluble cell meats will pass through the screen. Once the fibrous solids are removed, this will leave a dehulled slurry consisting of insoluble protein containing cell meat fragments plus an oil-in-water liquid phase. The water component will contain full dissolved soluble proteins, carbohydrates and minerals. As such the total protein in the de-hulled slurry consists of a combination of insoluble proteins within cell meat fragments and soluble proteins in the water phase. The aqueous dehulling step could also be performed after the pH adjustment step discussed below, although this leads to less effective results.

In a third step of the present invention, the aqueous slurry is then treated with alkaline material to adjust its pH, to a pH of greater than pH 8. The preferred pH is in the range of 9-10. Although good results can be obtained at a higher pH, the preferred upper limit of the pH is 12. This pH manipulation assists in the release of oil from protein and other binding sites in the oilseed and is integral for the aqueous oil recovery process. At alkaline pH, the oil exists in the slurry predominately as unbound free oil. The alkaline material selected can be any suitable material that is not poisonous and easy to use. Exemplary bases which are useful in the process of the present invention include but are not limited to NaOH, KOH or CaO or CaOH₂. At this stage, the slurry will contain a protein fraction and an oil-in-water liquid phase. The proteins present in the aqueous slurry can be both insoluble and soluble.

In a fourth step of the present invention shown as step (d) in FIG. 1 and step (e) in FIG. 3, all of the insoluble materials are removed to produce a protein-enriched solids fraction and a solids-free liquid phase. This can be accomplished via any suitable means known in the art. Typical solids-liquid separation processes are centrifugation which uses gravity to separate solids from liquid or compression-filtration where all of the solids become entrapped on a filtering mat that is compressed to improve the overall efficiency of the solids-liquid separation Once separated, this will leave the desired oil-in-water phase, which may also contain soluble proteins, carbohydrates and minerals. Optionally, the solids fraction can be resuspended in water and washed to improve oil flow to the oil in water liquid phase.

In an optional step as illustrated by step (f) in FIG. 2 and step (g) in FIG. 4, the soluble proteins present in the slurry can also be precipitated from the aqueous slurry using any known manner known to one skilled in the art, including but not limited to heat induced denaturation of the soluble proteins. This also assists in solubilizing other organic materials present in the slurry. In order to achieve this, it is preferred that the temperature of the slurry after alkaline pH modification is increased to 80-110°C for a period sufficient to induce denaturation and curding of the protein present in the slurry. The period of temperature exposure can vary but is typically between 2-60 minutes, preferably 15 minutes. Any suitable process can then be used to separate the precipitated protein from the slurry using methods known to a person skilled in the art including, but not limited to, centrifugation and compression filtration. The precipitated protein is then removed along with the insoluble protein and other insoluble components of the slurry, as shown in step (g) of FIG. 2 and step (h) of FIG.4. As such precipitation of the protein increases the total fraction of insoluble protein (with a corresponding decrease in the fraction of remaining soluble protein) in the slurry and thus increases protein flow to the solids fraction.

After completion of the solids-liquid separation, what remains is a solids-free oil-laden liquid fraction. Removal of solids is required for efficient oil-water separation. The oil is then separated from the liquid using established processes, known to one skilled in the art, and shown as step (e) in FIGS 1 and 2 and step (f) in FIGS. 3 and 4. Examples of oil-water separation are disk-stacked centrifugation to separate by gravity the oil and water phases in the liquid, and oil-coalescing whereby small oil droplets adhere to hydrophobic media and aggregate to form larger droplets that will rise to the surface and thus fully separate from the water phase to facilitate a skimming of purified oil layer.

The oil that is thereby recovered using this aqueous process can then be added to the expelled oil to provide an improved efficiency of total oil recovery relative to other non-organic solvent based processes.

The invention will further be described by reference to the examples showing the treatment of canola seed. This description relates to currently preferred embodiments of the invention, and modifications can be made without departing from the scope of the invention.

### Example 1: Effect of pH on Oil Release to the Liquid Phase of a Slurry of "Double Press" Canola Cake

A total of 1 metric tonne of whole seed canola was processed at POS Pilot Plant in Saskatoon, Saskatchewan. The seed was flaked (Laufhoff Flakmaster Model S-28), cooked (Simon-Rosedown Cooker) at 85-90°C for 20 minutes and then expelled through a low pressure oilseed pre-press (Simon-Rosedown 9.5 cm Pre-Press) to generate an oil phase and a prepress cake. The prepress cake contained non-oil portions of the seed plus residual oil that accounted for 26.4% of the total dry matter. The pre-press cake was then processed through a high pressure oilseed full press (DeSmet Mini-press 200) to generate additional oil and a "double press cake". The double press cake consisted of non-oil portions of the whole seed plus residual oil that accounted for 13.1 % of the dry matter in the cake.

A total of 600 g of double press cake was divided into 6 treatments as shown in table 1. The pH of each treatment was adjusted as indicated in table 1 by the addition of NaOH. Treatment 1 did not undergo pH adjustment and the pH of the slurry was measured as 5.5.

**Table 1: Treatments for assessment of effect of pH on oil release from a slurry of double press canola cake.**

| Treatment | G double press cake | ml 60°C water | pH |
|---|---|---|---|
| 1 | 100 | 500 | No adjustment |
| 2 | 100 | 500 | 6 |
| 3 | 100 | 500 | 7 |
| 4 | 100 | 500 | 8 |
| 5 | 100 | 500 | 9 |
| 6 | 100 | 500 | 10 |

Each treatment slurry was vigorously agitated for 10 minutes and then centrifuged (Beckman JA-20) at 10,000 rpm for 30 minutes. The solids-free clarified supernatant (extract) was pored off and the solids were washed by resuspension with 500 ml of 60°C water. The pH of the resuspended solids was adjusted to the pH of the starting treatment with NaOH. The resuspended solids were vigorously agitated for 10 minutes and then centrifuged for 30 minutes at 10,000 rpm. The second solids-free clarified supernatant was pored off and combined with the first supernatant. The purpose of the wash step was to remove the bulk of soluble dry matter and free oil remaining in the pellet and collect this in the solids free liquid phase.

Table 2 shows the dry matter and ether extractable crude fat in the starting cake and the washed pellets (extracted solids) obtained from each of the treatments. Increasing the pH to 9 had little effect on the efficiency of total dry matter extraction into the solids free liquid phase. At pH 10 dry matter extraction efficiency increased by 6% relative to the treatment with no pH adjustment of the slurry. However, increasing the pH to 8 or higher results in a near 2-fold increase in the efficiency of crude fat extraction relative to the treatment without pH adjustment.

**Table 2: Effect of pH on the dry matter and extractable crude fat content of washed pellets of double press canola cake.**

| Sample | pH | Dry matter (g) | Ether extract (g) | Extraction Efficiency (%) | |
|---|---|---|---|---|---|
| | | | | Dry matter | Ether extract |
| Starting cake | ------ - | 92.80 | 11.28 | ------- | ------- |
| Treatment 1 | 5.5 | 61.53 | 9.54 | 33.70 | 15.43 |
| Treatment 2 | 6 | 61.42 | 9.55 | 33.77 | 15.30 |
| Treatment 3 | 7 | 63.39 | 9.09 | 31.67 | 19.39 |
| Treatment 4 | 8 | 60.18 | 8.11 | 35.13 | 28.12 |
| Treatment 5 | 9 | 59.79 | 8.08 | 35.55 | 28.34 |
| Treatment 6 | 10 | 55.91 | 7.74 | 39.72 | 31.36 |

### Example 2: pH Dependent Oil Release from Heat-Denatured Insoluble Canola Protein

Twenty kg of double press cake (produced as described in example 1) was slurried in 100 L of water at 60°C. The slurry was screened through a 118 micron pore opening screen to remove a fibrous solids material and generate a first extract. The first extract contained material in solution plus small fragments of cell meat solids that passed through the screen. The extracted fibrous solids were then resuspended in 100 L of 60°C water and passed through the 118 micron opening screen to generate a first washed fibrous solids material enriched in retained hull fragments and a counter current wash liquid. The counter current wash liquid was used to slurry a second batch of 20 kg of double press cake. This slurry was screened as previously described to generate a second extract and fibrous solids. The fibrous solids was then slurried with 100 L of 60°C water and then screened to generate a second washed fibrous solids and a counter current wash. A third batch of 20 kg of double press cake was processed through the counter current wash extraction process to generate a third extract and a third washed fibrous solids. The three extracts were combined for further processing and the 3 washed fibrous solids were discarded.

The combined extract was divided into 3 batches and the pH of the individual batches was adjusted by the addition of NaOH to 7.0, 9.0, and 10.0. The temperature of each batch was increased to 95-100°C and this temperature was maintained for 5 minutes to induce denaturation and curding of the protein in the batch. Each batch was separated into a solids-free clarified liquid and a solids phase by compression filtration of the solids through a screen with a pore opening size of 108 micron. The screened solids (enriched in curded protein) were then resuspended in an equal volume of 70°C water and filtered for a second time on the screen. The clarified liquid was combined with the wash. The solids-free liquid plus wash contained soluble materials plus free oil released into the liquid phase.

Table 3 shows the ether extractable crude fat content and the % of whole seed ether extractable crude fat in each of the fractions. The double pressing procedure produced a cake with a residual oil content of 13.11% of total dry matter in the cake which accounts for 21.4% of starting seed crude fat. The bulk of this fat was captured in the extract during the aqueous dehulling step. When the protein in the extract was precipitated at pH 7.0 and then dewatered, resuspended and dewatered a second time, the insoluble protein enriched solids fraction contained 13.72% crude fat which accounted for 8.6% of the starting whole seed crude fat. However, when the curding, dewatering, resuspension and second dewatering procedure was conducted on pH 10 extract the washed solids contained 7.1% crude fat which accounted for 4.5% of the crude fat in the whole seed starting material. A corresponding increase in the fat content of the liquid plus wash solution was obtained in comparing results from pH 7 and pH 10 batches of extract. As such, in comparison to neutral pH processing, curding and washing the protein at pH 10 resulted in a 2-fold increase in the percentage of crude fat released from the solids phase into the liquid phase of the separation.

**Table 3: Crude fat content fractions and crude fat mass flows during expelling and aqueous fractionation of whole seed canola.**

| | ether extractable fat | |
|---|---|---|
| | % of dry matter | % of starting seed ether extractable fat |
| Whole Seed | 42.1 | 100 |
| Double press cake | 13.11 | 21.4 |
| Combined washed fibrous solids | 7.69 | 2.3 |
| Combined extract | 15.59 | 19.1 |
| pH 7.0 insoluble protein | 14.7 | 11.0 |
| pH 7.0 washed insoluble protein | 13.72 | 8.6 |
| pH 7.0 liquid plus wash | 14.08 | 7.4 |
| pH 9.0 insoluble protein | 11.79 | 8.8 |
| pH 9.0 washed insoluble protein | 11.58 | 7.2 |
| pH 9.0 liquid plus wash | 23.83 | 8.8 |
| pH 10.0 insoluble protein | 11.79 | 8.8 |
| pH 10.0 washed insoluble protein | 7.10 | 4.5 |
| pH 10.0 liquid plus wash | 17.72 | 11.6 |

### Example 3: Separation of Oil from an Oil-Water Liquid Phase Obtained from Processing of "Double Pressed" Canola Seed Cake.

Whole canola seed was expelled as described in example 1 to generate 100 kg of cake containing 13.11% residual oil. The four batches were then run through the counter current wash extraction protocol as described in example 2; however, 125 L of 60°C water was used for each batch of cake. The 4 extracts were combined and the pH adjusted to 10.0 with NaOH. The temperature of the extract was then increased to >95°C for 5 minutes to induce protein curding and the solids were separated from the liquid phase using filter bags and compression dewatering as described in example 1. The dewatered curd was washed with an equal volume of 60°C water and liquid and wash water from dewatering the solids was combined to for a liquid stream containing approximately 20% ether extractable fat on a dry matter basis.

The canola oil-in water liquid stream was fed to a disk-stacked oil separating centrifuge (Westfalia model SA7) and an oily light phase plus a watery heavy phase output was obtained. The oily light phase contained 45% ether extractable crude fat and 55% water. The watery heavy phase contained only a trace amount of ether extractable fat (0.16%). The oily light phase was in the form of a creamy oil-water emulsion.

Pure oil was generated either by boiling off the residual the water from the oily light phase or by processing the light phase through a purifier disk-stacked centrifuge (Alfa Laval Lab 102B) which produced a final pure oil light phase out and an oil-free aqueous phase.

### Example 4: Separation of Oil from an Oil-Water Liquid Phase Obtained from Processing of "Pre-Press" Canola Seed Cake.

This example demonstrates the effect of pH adjustment on affecting the release of oil from the protein enriched solids phase into the liquid phase. Pre-press canola cake was obtained from a commercial canola crushing operation. The cake was generated by processing through a single low pressure expeller. Ether extractable crude fat accounted for 24.3% of dry matter in the pre-press cake. Three batches of 20 kg of pre-press cake was processed through the counter-current wash extraction protocol as described in Example 2 and combined to generate a combined dehulled slurry and a combined extracted solids enriched in hull fragments. The extract was divided into 4 fractions and the pH of the individual fractions was adjusted to pH 7, pH 9, pH 9.5 and pH 10 by the addition of NaOH. The temperature of each fraction was increased to 95°C and maintained for 5 minutes to induce curding (heat-induced protein precipitation) in the samples. Protein enriched solids were then separated from the liquid components of the heated extract by compression filtration dewatering as described in example 1 to generate an initial dewatered curd. The protein enriched solids were washed with an equal volume of water (washed curd), and then washed a second time (double washed curd) with a second equal volume of water. Ether extractable crude fat was determined in each of the samples and is shown in table 4. Increasing the pH of the extract to 10 prior to curding resulted in a 26%, 34% and 44% decrease in the fat content of the dewatered curd, washed curd and double washed curd when compared to corresponding samples from the pH 7 treatment.

**Table 4: Effect of pH on ether extractable crude fat content of the insoluble canola protein after curd dewatering, washing and double washing.**

| Sample | Ether Extractable Crude Fat (% of dry matter) |
|---|---|
| Pre-press cake | 26.4 |
| pH 7 curd | 26.0 |
| pH 7 washed curd | 22.6 |
| pH 7 double washed curd | 22.9 |
| pH 9 curd | 22.9 |
| pH 9 washed curd | 19.4 |
| pH 9 double washed curd | 14.0 |
| pH 9.5 curd | 24.7 |
| pH 9.5 washed curd | 19.2 |
| pH 9.5 double washed curd | 15.2 |
| pH 10 curd | 19.2 |
| pH 10 washed curd | 14.8 |
| pH 10 double washed curd | 12.8 |

## Claims

1. A process for the aqueous extraction of oil from an oilseed starting material without use of an organic solvent comprising the following steps:
(a) expelling an oilseed starting material to produce an oil and a solid material that contains residual oil;
(b) slurrying the solid material with water to create a slurry;
(c) adding sufficient alkaline compound to the slurry to increase the pH of the slurry to a pH of 8 or higher;
(d) separating out the slurry into an insoluble protein enriched fraction and an oil-in-water liquid phase; and
(e) separating out the oil from the oil-in-water liquid phase, wherein the oilseed starting material is selected from soybean, canola and rapeseed, sunflower, cottonseed, sesame and safflower.

2. The process of claim 1 comprising the additional steps of:
(f) precipitating soluble protein from the slurry in step (c);
(g) separating out said precipitated soluble protein from the slurry with said insoluble protein enriched fraction, in step (d).

3. A process for the aqueous extraction of oil from an oilseed starting material without use of an organic solvent comprising the following steps:
(a) expelling an oilseed starting material to produce an oil and a solid material that contains residual oil;
(b) slurrying the solid material with water to create a slurry;
(c) removing fibrous solids from said slurry in step (b) to generate a fibrous fraction and a protein plus oil-in-water liquid phase;
(d) adding sufficient alkaline compound to the protein plus oil-in-water liquid phase in step (c) to increase the pH to a pH of 8 or higher;
(e) separating the slurry from step (d) into an insoluble protein enriched fraction and oil-in-water liquid phase;
(f) separating out the oil from the oil-in-water liquid phase in step (e), wherein the oilseed starting material is selected from soybean, canola and rapeseed, sunflower, cottonseed, sesame and safflower.

4. The process of claim 3 including the additional steps of:
(g) precipitating soluble protein from the slurry in step (d);
(h) separating out said precipitated soluble protein with said insoluble protein enriched fraction, in step (e).

5. The process of claims 2 or 4 whereby the protein is precipitated by heat-induced denaturation.

6. The process of any one of claims 1-5 whereby said protein enriched fraction is separated by centrifugation.

7. The process of any one of claims 1-5 whereby said protein enriched fraction is separated by filtration.

8. The process of any one of claims 1-7 whereby a ratio of water: solid material in step (b) is equal to or greater than between about 3.5-7:1.

9. The process of claim 8 whereby the ratio of water: solid material in step (b) is about 5:1.

10. The process of any one of claims 1-8 wherein said alkaline compound is added to increase the pH of the slurry to a pH 9.

11. The process of any one of claims 1-8 wherein said alkaline compound is added to increase the pH of the slurry to a pH of 10.

12. The process of any one of claims 1-11 wherein the oilseed starting material is rapeseed.

13. The process of any one of claims 1-11 wherein the oilseed starting material is canola.

## Patentansprüche

1. Verfahren für die wässrige Extraktion von Öl aus einem Ölsamenausgangsmaterial ohne die Verwendung eines organischen Lösungsmittels, umfassend die folgenden Schritte:
(a) Expellieren eines Ölsamenausgangsmaterials, um ein Öl und einen Feststoff, der Restöl enthält, herzustellen;
(b) Aufschlämmen des Feststoffs mit Wasser, um eine Aufschlämmung zu erzeugen;
(c) Hinzufügen von ausreichend alkalischer Verbindung zu der Aufschlämmung, um den pH der Aufschlämmung auf einen pH von 8 oder höher zu erhöhen;
(d) Trennen der Aufschlämmung in eine unlösliche Protein-angereicherte Fraktion und eine Öl-in-Wasser Flüssigphase; und
(e) Trennen des Öls von der Öl-in-Wasser Flüssigphase,
wobei das Ölsamenausgangsmaterial ausgewählt ist aus Sojabohne, Canola und Raps, Sonnenblume, Baumwollsamen, Sesam und Saflor.

2. Verfahren nach Anspruch 1 umfassend die zusätzlichen Schritte:
(f) Ausfällen von löslichem Protein aus der Aufschlämmung in Schritt (c);
(g) Trennen des ausgefällten löslichen Proteins von der Aufschlämmung mit der unlöslichen Protein-angereicherten Fraktion in Schritt (d).

3. Verfahren für die wässrige Extraktion von Öl aus einem Ölsamenausgangsmaterial ohne die Verwendung eines organischen Lösungsmittels, umfassend die folgenden Schritte:
(a) Expellieren eines Ölsamenausgangsmaterials, um ein Öl und einen Feststoff, der Restöl enthält, herzustellen;
(b) Aufschlämmen des Feststoffs mit Wasser, um eine Aufschlämmung zu erzeugen;
(c) Entfernen von faserartigen Feststoffen aus der Aufschlämmung in Schritt (b), um eine faserartige Fraktion und eine Protein plus Öl-in-Wasser Flüssigphase zu erzeugen;
(d) Hinzufügen von ausreichend alkalischer Verbindung zu der Protein plus Öl-in-Wasser Flüssigphase in Schritt (c), um den pH auf einen pH von 8 oder höher zu erhöhen;
(e) Trennen der Aufschlämmung aus Schritt (d) in eine unlösliche Protein-angereicherte Fraktion und eine Öl-in-Wasser Flüssigphase;
(f) Trennen des Öls von der Öl-in-Wasser Flüssigphase in Schritt (c),
wobei das Ölsamenausgangsmaterial ausgewählt ist aus Sojabohne, Canola und Raps, Sonnenblume, Baumwollsamen, Sesam und Saflor.

4. Verfahren nach Anspruch 3 beinhaltend die zusätzlichen Schritte:
(g) Ausfällen von löslichem Protein aus der Aufschlämmung in Schritt (d);
(h) Trennen des ausgefällten löslichen Proteins mit der unlöslichen Protein-angereicherten Fraktion in Schritt (e).

5. Verfahren nach den Ansprüchen 2 oder 4, wobei das Protein durch wärmeinduzierte Denaturierung ausgefällt wird.

6. Verfahren nach einem der Ansprüche 1-5, wobei die Protein-angereicherte Fraktion durch Zentrifugation abgetrennt wird.

7. Verfahren nach einem der Ansprüche 1-5, wobei die Protein-angereicherte Fraktion durch Filtration abgetrennt wird.

8. Verfahren nach einem der Ansprüche 1-7, wobei ein Verhältnis von Wasser : Feststoff in Schritt (b) gleich oder größer als zwischen ungefähr 3.5-7:1 ist.

9. Verfahren nach Anspruch 8, wobei das Verhältnis von Wasser : Feststoff in Schritt (b) ungefähr 5:1 ist.

10. Verfahren nach einem der Ansprüche 1-8, wobei die alkalische Verbindung hinzugefügt wird, um den pH der Aufschlämmung auf einen pH von 9 zu erhöhen.

11. Verfahren nach einem der Ansprüche 1-8, wobei die alkalische Verbindung hinzugefügt wird, um den pH der Aufschlämmung auf einen pH von 10 zu erhöhen.

12. Verfahren nach einem der Ansprüche 1-11, wobei das Ölsamenausgangsmaterial Raps ist.

13. Verfahren nach einem der Ansprüche 1-11, wobei das Ölsamenausgangsmaterial Canola ist.

## Revendications

1. Procédé d'extraction aqueuse d'huile à partir de graines oléagineuses comme matières de départ sans utilisation de solvant organique comprenant les étapes suivantes :
(a) pressage de graines oléagineuses comme matières de départ pour produire une huile et une matière solide qui contient de l'huile résiduelle ;
(b) mise en bouillie de la matière solide avec de l'eau pour obtenir une bouillie ;
(c) ajout de suffisamment de composé alcalin à la bouillie pour élever le pH de la bouillie à un pH de 8 ou plus ;
(d) séparation de la bouillie en une fraction enrichie en protéine insoluble et une phase liquide huile-dans-eau ; et
(e) séparation de l'huile de la phase liquide huile-dans-eau, les graines oléagineuses comme matières de départ étant sélectionnées parmi le soja, le canola et le colza, le tournesol, le coton, le sésame et le carthame.

2. Procédé de la revendication 1 comprenant les étapes supplémentaires de :
(f) précipitation de la protéine soluble, dans la bouillie de l'étape (c) ;
(g) séparation de ladite protéine soluble ainsi précipitée et de la bouillie, avec ladite fraction enrichie en protéine insoluble, de l'étape (d).

3. Procédé d'extraction aqueuse d'huile à partir de graines oléagineuses comme matières de départ sans utilisation de solvant organique comprenant les étapes suivantes :
(a) pressage de graines oléagineuses comme matières de départ pour produire une huile et une matière solide qui contient de l'huile résiduelle ;
(b) mise en bouillie de la matière solide avec de l'eau pour obtenir une bouillie ;
(c) élimination des solides fibreux de ladite bouillie de l'étape (b) pour obtenir une fraction fibreuse et une phase liquide protéine plus huile-dans-eau ;
(d) ajout de suffisamment de composé alcalin à la phase liquide protéine plus huile-dans-eau de l'étape (c) pour élever le pH à un pH de 8 ou plus ;
(e) séparation de la bouillie de l'étape (d) en une fraction enrichie en protéine insoluble et une phase liquide huile-dans-eau ;
(f) séparation de l'huile de la phase liquide huile-dans-eau de l'étape (e), les graines oléagineuses comme matières de départ étant sélectionnées parmi le soja, le canola et le colza, le tournesol, le coton, le sésame et le carthame.

4. Procédé de la revendication 3 incluant les étapes supplémentaires de :
(g) précipitation de la protéine soluble, dans la bouillie de l'étape (d) ;
(h) séparation de ladite protéine soluble ainsi précipitée, avec ladite fraction enrichie en protéine insoluble, de l'étape (e).

5. Procédé des revendications 2 ou 4 dans lequel la protéine est précipitée par dénaturation induite par la chaleur.

6. Procédé de l'une quelconque des revendications 1 à 5 dans lequel ladite fraction enrichie en protéine est séparée par centrifugation.

7. Procédé de l'une quelconque des revendications 1 à 5 dans lequel ladite fraction enrichie en protéine est séparée par filtration.

8. Procédé de l'une quelconque des revendications 1 à 7 dans lequel un rapport eau:matière solide de l'étape (b) est supérieur ou égal à environ 3,5-7:1.

9. Procédé de la revendication 8 dans lequel le rapport eau:matière solide de l'étape (b) est d'environ 5:1.

10. Procédé de l'une quelconque des revendications 1 à 8 dans lequel ledit composé alcalin est ajouté pour élever le pH de la bouillie à un pH de 9.

11. Procédé de l'une quelconque des revendications 1 à 8 dans lequel ledit composé alcalin est ajouté pour élever le pH de la bouillie à un pH de 10.

12. Procédé de l'une quelconque des revendications 1 à 11 dans lequel les graines oléagineuses comme matières de départ sont du colza.

13. Procédé de l'une quelconque des revendications 1 à 11 dans lequel les graines oléagineuses comme matières de départ sont du canola.
